Europäisches Patentamt

European Patent Office

Office européen des brevets

(11) Veröffentlichungsnummer: **0 309 855**
**A2**

## (12) EUROPÄISCHE PATENTANMELDUNG

(21) Anmeldenummer: 88115355.5

(22) Anmeldetag: 19.09.88

(51) Int. Cl.⁴ **H04B 7/24 , H04B 7/12 , H04K 3/00**

(30) Priorität: 29.09.87 CH 3795/87

(43) Veröffentlichungstag der Anmeldung:
05.04.89 Patentblatt 89/14

(84) Benannte Vertragsstaaten:
AT BE DE FR GB IT NL SE

(71) Anmelder: **Zellweger Telecommunications AG**
**Eichtalstrasse**
**CH-8634 Hombrechtikon(CH)**

(72) Erfinder: **Küng, Roland**
**Bühlhofstrasse 66a**
**CH-8633 Wolfhausen(CH)**
Erfinder: **Widmer, Hanspeter**
**Rainstrasse 8**
**CH-8132 Egg b. Zürich(CH)**

(74) Vertreter: **Dittrich, Horst**
**Zellweger Uster AG Patentabteilung**
**Wilstrasse 11**
**CH-8610 Uster(CH)**

(54) Verfahren und Vorrichtung zur Uebertragung von Selektivadressen und/oder Notmeldungen in Kurzwellenfunknetzen.

(57) Die Selektivadressen und/oder Notmeldungen werden zwischen den einzelnen Stationen mittels eines von einem Sender ausgesandten und aus einem Synchronisations- und aus einem Adressensignal (SS bzw. AS) bestehenden Rufsignals übertragen. Als Adressensignal (AS) wird ein FSK-Signal verwendet, welches durch Aufteilung in zwei identische m-äre FSK-Signale ein Diversity-Paar bildet. Als Betriebsart wird ein Channel in Band Scanning verwendet. Die Vorrichtung enthält einen Adressensignalempfänger, welcher mittels Echtzeit-Digital-Signalverarbeitung realisiert ist.

Dadurch sind die gewünschten Teilnehmer und nur diese eindeutig und zuverlässig aktivierbar und das Verfahren ist gegenüber Störungen äusserst unempfindlich.

FIG. 2

EP 0 309 855 A2

## Verfahren und Vorrichtung zur Uebertragung von Selektivadressen und/oder Notmeldungen in Kurzwellenfunknetzen

Die Erfindung betrifft ein Verfahren zur Uebertragung von Selektivadressen und/oder Notmeldungen in Kurzwellenfunknetzen mit mehreren einen Sender und/oder einen Empfänger aufweisenden Stationen, mittels eines von einem Sender ausgesandten und aus einem Synchronisations- und aus einem Adressensignal bestehenden Rufsignals.

Kurzwellenverbindungen benützen hauptsächlich die Ausbreitung von Raumwellen, die an der lonosphäre reflektiert werden, um eine Nachrichtenübertragung über grosse Distanzen zu realisieren. Trotz der Unzulänglichkeiten des Uebertragungskanals für eine Raumwellenverbindung - wie rauschähnliche Kanalstörungen, zeitvariantes, dispersives Kanalverhalten und Anwesenheit selektiver Störer - gewinnt diese Uebermittlungsart in jüngster Zeit, dank neuer Mikroprozessortechniken und im Vergleich zu Satelliten geringen Kosten, stark an Bedeutung.

Heute übliche Uebertragungen erfolgen zur ökonomischen Verwendung des Frequenzvorrats mittels Einseitenbandtechnik, wobei senderseitig eine Frequenztranslation des Signals aus dem Tonfrequenzband (300 Hz bis 3,4 kHz) in ein gewähltes HF-Band vorgenommen und vom HF-Empfänger die umgekehrte Operation durchgeführt wird. Das empfangene Signal wird im NF-Bereich an Demodulator-und Decoderschaltungen weitergegeben. Die HF-Empfänger verfügen über automatische Verstärkungsregelungen, wobei die Gesamtleistung oder -spannung innerhalb der gewählten Empfangskanalbreite die Regelgrösse bildet. Dabei stellen sich am Ausgang je nach spektraler Belegung von Nutz- und Störsignal unterschiedliche Geräusch-und Nutzpegel ein und zwar in weiten Grenzen. Insbesondere sind selektive Störer, die mehr Signalenergie aufweisen als das Nutzsignal, häufig anzutreffen und der Kanal gilt dann zumeist als besetzt.

Bei einem Selektivrufnetz sollen sich verschiedene Stationen einzeln oder mit einem Sammelwort aktivieren lassen. Die Selektivrufsender und -empfänger der einzelnen Stationen sind in deren Modulator- bzw. Demodulatorblock untergebracht. Die Rufsignale setzen sich aus einem Satz von geeigneten Amplituden-Zeit-Funktionen zusammen, die von den einzelnen Empfänger im Kanalgeräusch erkannt und voneinander unterschieden werden können. Auch bei schlechter Uebertragungsqualität sollen einerseits keine falschen Stationen und anderseits die gewünschten Stationen immer aktiviert werden.

Heute übliche Pilottonübertragungen vermögen diese Anforderungen nicht zu erfüllen, weil die Fehlsynchronisations-Wahrscheinlichkeit mit der Anwesenheit bestimmter Störungen ansteigt.

Es ist bekannt, zusätzlich zu den Sender-Empfängerteilen der Stationen ein relativ aufwendiges Gerätesystem zu verwenden, mit welchem feststellbar ist, welcher Kanal frei und ungestört von Nachbarsendern ist und wie die momentanen Ausbreitungsbedingungen über die Ionosphäre sind ("Assessing HF Propogation Conditions in Real Time", Defense Electronics, Mai 1980, S.21, 22). Ein vollautomatischer Aufbau einer Kurzwellenverbindung ist jedoch mit diesem System nicht möglich. Bei bewusst gewollten Störern (ECM) nützt eine vorgängige Kanalanalyse nur wenig, da der benützte Kanal jeweils sofort gestört wird.

In der europäischen Patentanmeldung Nr. 87105972.1 (= EP-A-0 243 885) vom 23.04.1987 ist ein Verfahren beschrieben, welches einen vollautomatischen Aufbau von Kurzwellenverbindungen zwischen den einzelnen Stationen ermöglicht, wobei auch bei schlechter Uebertragungsqualität immer ausschliesslich nur die gewünschten Stationen aktiviert werden. Dies erfolgt durch Verwendung eines markanten, an den Uebertragungskanal angepassten Synchronisationssignals, welches aus schmalbandigen Mark- und Space-Signalen besteht, welche die Teilsignale eines Diversity-Paares bilden.

Es ist nun Aufgabe der Erfindung, ein Adressensignal anzugeben, welches eindeutig und zuverlässig die gewünschten Teilnehmer und nur diese aktiviert und welches gegenüber Störungen möglichst unempfindlich ist.

Diese Aufgabe wird erfindungsgemäss dadurch gelöst, dass als Adressensignal ein FSK-Signal verwendet wird, welches durch Aufteilung in zwei identische m-äre FSK-Signale ein Diversity-Paar bildet, und dass als Betriebsart ein Channel in Band Scanning verwendet wird.

Die Verwendung zweier identischer, ein Diversity-Paar bildender FSK-Signale eröffnet die Möglichkeit einer separaten Detektion dieser Teilsignale, was die Zuverlässigkeit der Uebertragung ganz beträchtlich erhöht. Denn die Wahrscheinlichkeit, dass in beiden Diversity-Kanälen ein gleichzeitig genau auf das Adressensignal treffender Störer vorhanden ist, ist sehr gering. Ausserdem bietet das m-äre Signal mit FSK-Modulation den Vorteil, dass die Adressensequenzen bei gegebener Bandbreite und gegebener Anzahl von Codewörtern mit bestimmter Hammingdistanz möglichst kurz gehalten werden können. Die Betriebsart des Channel in Band Scanning ermöglicht eine hohe Immunität gegen In-Band Störungen.

Die Erfindung betrifft weiter eine Vorrichtung zur Durchführung des genannten Verfahrens mit einem Adressensignalempfänger.

Die erfindungsgemässe Vorrichtung ist dadurch gekennzeichnet, dass der Adressensignalempfänger einen analogen Eingangsteil und einen Signalprozessor zur numerischen Signalverarbeitung aufweist, durch welchen Signalprozessor mittels einer schnellen Fouriertransformation eine Transformation der Pulse in den Frequenzraum erfolgt.

Im folgenden wird die Erfindung anhand eines Ausführungsbeispiels und der Zeichnungen näher erläutert; dabei zeigt:

Fig. 1 ein Blockschaltbild einer üblichen Kurzwellenverbindung mit Sender und Empfänger,

Fig. 2 eine schematische Darstellung eines Rufsignals,

Fig. 3 eine schematische Darstellung der Pulse eines Adressensignals in der Zeit-Frequenz-Ebene,

Fig. 4 ein Beispiel eines Rufprogramms zur Funkverkehrsaufnahme,

Fig. 5 ein Ablaufdiagramm einer Betriebsart, bei welcher der Empfänger im sogenannten CHIBSCAN-Modus läuft,

Fig. 6 ein Blockschema eines Adressensignalempfängers,

Fig. 7 ein Diagramm zur Funktionserläuterung,

Fig. 8 eine Darstellung der FFT-Ausgangswerte in der diskreten Zeit-Frequenz-Ebene,

Fig. 9 ein erstes Detail von Fig. 6,

Fig. 10 eine andere Darstellung des Details von Fig. 9,

Fig. 11 ein zweites Detail von Fig. 6,

Fig. 12 ein Diagramm zur Funktionserläuterung,

Fig. 13 ein Detail von Fig. 11, und

Fig. 14 ein Diagramm zur Funktionserläuterung.

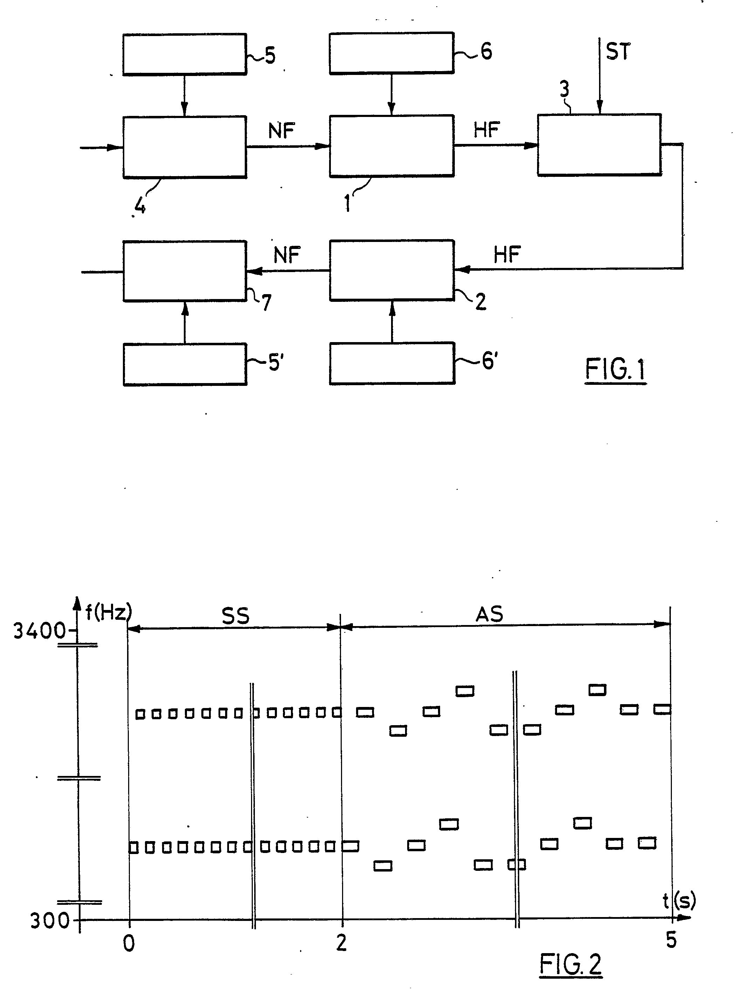

Gemäss Fig. 1 besteht eine übliche heute verwendete Kurzwellenverbindung aus einem Sender 1 und einem Empfänger 2, zwischen denen die Signale über ein Uebertragungsmedium 3 übertragen werden. Die senderseitige Dateneingabe erfolgt in eine Modulator-/Coderschaltung 4, welcher eine Zeitbasis 5 zugeordnet ist. Das Ausgangssignal der Modulator-/Coderschaltung 4 ist ein NF-Signal im Tonfrequenzband zwischen 300 Hz und 3,4 kHz. Mit diesem NF-Signal wird durch den Sender 1, der ein HF-SSB-Sender ist, eine Frequenztranslation in ein gewähltes HF-Band vorgenommen. Dem Sender 1 ist eine Frequenzbasis 6 im Bereich des HF-Bandes zugeordnet. Das in das zeitvariante Uebertragungsmedium 3 ausgesandte HF-Ausgangssignal des Senders 1 liegt beispielsweise im Bereich zwischen 3 und 30 MHz. Zu diesem HF-Signal kommt im Uebertragungsmedium 3 ein additives Störgeräusch ST hinzu.

Im HF-SSB-Empfänger 2, welchem eine HF-Frequenzbasis 6' zugeordnet ist, wird das empfangene HF-Signal in ein NF-Signal im senderseitigen Tonfrequenzband transferiert und einer Demodulator-/Decoderschaltung 7 zugeführt, welcher eine Zeitbasis 5' zugeordnet ist. Am Ausgang der Demodulator-/Decoderschaltung 7 erfolgt die Datenausgabe.

Wenn ein Kurzwellenfunknetz ein sogenanntes Selektivrufnetz bildet, dann ist eine Anzahl verschiedener Stationen vorhanden, welche einzeln oder mit einem Sammelruf aktivierbar sind. Dazu verfügt jede der beteiligten Stationen über einen Selektivrufsender und -empfänger, welche im Modulator- und Demodulatorblock 4 bzw. 7 der Anordnung von Fig. 1 untergebracht sind (siehe dazu beispielsweise DE-PS 32 11 325). Die Signale zum Aufruf, die sogenannten Rufsignale, setzen sich aus einem Satz von geeigneten Amplituden- Zeit-Funktionen zusammen, die von den einzelnen Empfängern im Kanalgeräusch erkannt und voneinander unterschieden werden können.

Fig. 2 zeigt in einer schematischen Zeit-Frequenz-Darstellung, in welcher auf der Ordinate die Frequenz in Hertz und auf der Abszisse die Zeit t in Sekunden aufgetragen ist, ein beim erfindungsgemässen Verfahren verwendetes Rufsignal, welches aus einem Synchronisationssignal SS und aus einem Adressensignal AS besteht. Auf das Synchronisationssignal SS und auf die Synchronisierung des Empfängers wird hier nicht näher eingegangen; es wird in diesem Zusammenhang auf die EP-A-0 243 885 verwiesen. Für die weitere Beschreibung sei davon ausgegangen, dass vor der Uebertragung des Adressensignals AS eine genügend genaue Frequenz- und Zeitsynchronisation vorgenommen wurde.

Das in der vorliegenden Beschreibung als Adressensignal AS bezeichnete Codewort kann zwei Bedeutungen haben. Und zwar kann es einerseits eine selektive Adresse und anderseits eine Notmeldung repräsentieren.

Eine Selektivrufadresse dient zur eindeutigen und zuverlässigen Unterscheidung mehrerer sich die zu benützenden Frequenzen teilenden Teilnehmer in einem Funknetz. Dabei sollen nur die jeweils beteiligten Stationen aktiviert und die übrigen Stationen nicht angesprochen werden. In einem erweiterten Rahmen oder bei Betrieb einer einzigen Verbindung kann dem Codewort auch die Bedeutung einer Notrufmeldung übertragen werden. Ein Beispiel dafür wäre die sichere Uebertragung von Notrufmeldungen zwischen zwei oder mehreren Stationen, die keine qualitativ ausreichende Verbindung für einen normalen Datenaustausch zur Verfügung haben. In einem derartigen Fall werden die Meldungen vor der Aussendung definiert und im Ernstfall am Empfänger in der ausgeschriebenen Textform angezeigt. Der Empfänger muss dazu in der Lage sein, alle definierten Codewörter mit der Empfangssequenz zu vergleichen. Derartige Notrufmeldungen wären beispielsweise "Schiff sinkt - Rettungshubschrauber notwendig", oder "Kanal gestört - Frequenzwechsel auf die 4. Frequenz auf der Liste" und dergleichen. Es kann auch jeder Buchstabe des Alphabets einem Notmeldecode zugeordnet werden, so dass ähnlich dem Morsecode eine Uebertragung erfolgen kann.

Während also das Synchronisationssignal SS jeden auf dem gleichen Kanal stehenden Empfänger frequenz- und bitsynchronisiert, werden durch das Adressensignal AS nur die selektiv angesprochenen Stationen aktiviert und dadurch in die Lage versetzt, den Wortbeginn einer nachfolgenden Sendung zu finden. Das Adressensignal AS bewirkt somit eine Wortsynchronisation der entsprechenden Empfänger.

Wie Fig. 2 entnommen werden kann, bildet das Adressensignal AS ebenso wie das in der genannten EP-A-0 243 885 beschriebene Synchronisationssignal SS ein Diversity-Paar. Die Zeitdauer wird auf etwa 2 bzw. 3 Sekunden begrenzt und die Bandbreite auf weniger als 100 Hz. Dadurch kann der Frequenzoffset innerhalb der 500 Hz-Emfgangsbandbreite zwischen den beiden Stationen möglichst gross sein, oder es können bei stabilen Geräten möglichst schmale ZFFilter verwendet werden. Da als Folge der unregelmässigen spektralen Energieverteilung in extrem dicht belegten Bändern die Detektierbarkeit schmalbandiger Signale besser ist als diejenige breitbandiger, können somit spektrale Energielöcher besser genutzt werden.

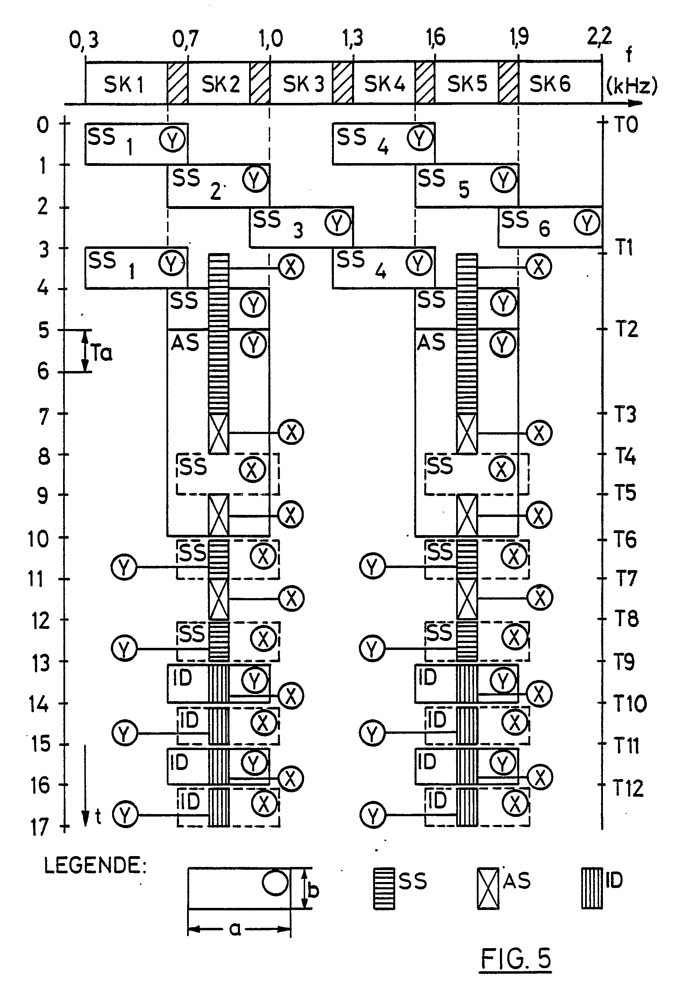

Als Lösung wurde ein Channel in Band System (nachfolgend als CHIBSCAN) gefunden, bei welchem mit einem Suchlauf innerhalb des ganzen Funkkanals von 3 kHZ Bandbreite operiert wird. Diese Betriebsart, welche eine hohe Immunität gegen In-Band Störungen ermöglicht, wird später anhand von Fig. 5 näher beschrieben.

Da mit der Begrenzung der Bandbreite auch die Zeichenrate beschränkt ist, verwendet man, um bei gegebener Bandbreite und gegebener Anzahl von Codes mit bestimmter Hammingdistanz die Adressensequenzen möglichst kurz halten zu können, ein m-äres, beispielsweise ein ternäres, Signal mit FSK-Modulation. Bei einem ternären Signal gilt $m = 3$.

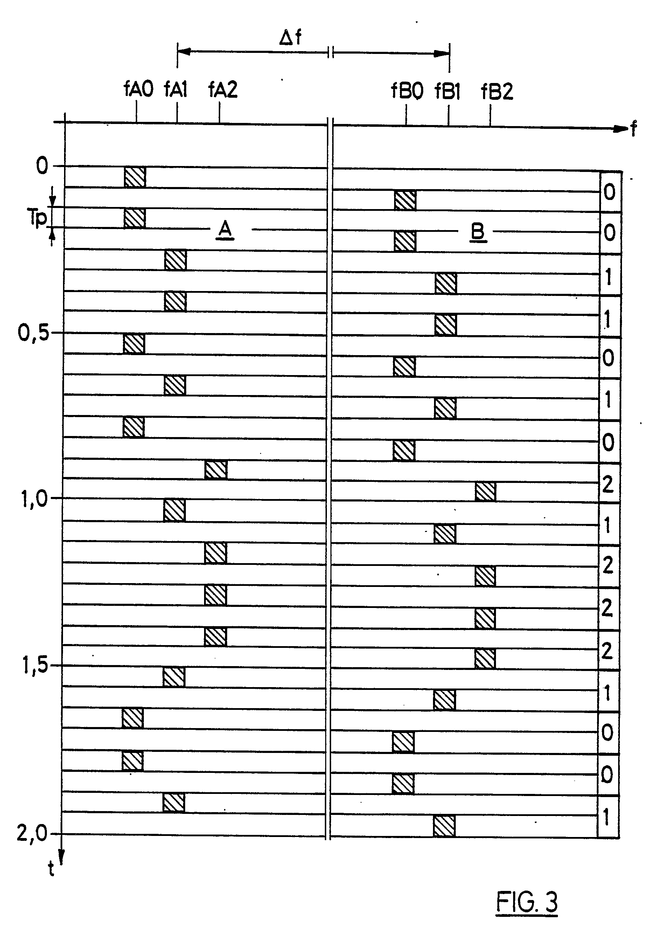

Fig.3 zeigt eine schematische Darstellung der Pulse eines derartigen Diversity-Paares mit $m = 3$ in der Zeit-Frequenz-Ebene, wobei auf der Abszisse die Frequenz f und auf der Ordinate die Zeit t in Sekunden eingetragen ist. Die Zeit-Frequenz-Ebene ist frequenzmässig in zwei Hälften unterteilt, von denen jede einem Teilkanal A beziehungsweise B entspricht. In jedem der beiden Teilkanäle A, B gelangen drei Töne zum Einsatz, die bei den Frequenzen fA0, fA1 und fA2 bzw. fB0, fB1 und fB2 liegen. Der Frequenzabstand einander entsprechender Töne der beiden Teilkanäle, oder mit anderen Worten, des Diversity-Paares, ist mit Delta f bezeichnet. Eine Signaleinheit der Länge Tp besteht aus einem rechteckförmigen Puls, welcher mit einem der drei möglichen Träger entsprechend den ternären Quellensymbolen moduliert ist. Am rechten Rand der Figur sind in einer Spalte die den einzelnen Tönen entsprechenden ternären Sequenzen angegeben.

Die Zeichenrate ist von der Bitrate verschieden und wird auf einen bestimmten Wert, beispielsweise in Anpassung an die 16 Hz Modulationsfrequenz des Synchronisationssignals SS (siehe EP-A-0 243 885) auf 16 Bd festgelegt. Diese Festlegung hat den Vorteil, dass der beim Synchronisationssignal veranschlagte Phasenwinkel gerade ein Mass der Zeitablage der Zeichensynchronisation darstellt. Somit wird die dem Kehrwert der Zeichenrate entsprechende Länge Tp gleich 62,5 ms. Dieser lange Puls ermöglicht eine gute Ausnützung der Kohärenzzeit, die meist länger ist als 100 ms. Ausserdem wird die Verletzlichkeit gegenüber Mehrwegausbreitung in Weitdistanzverbindungen praktisch beseitigt.

Eine weitere vorteilhafte Eigenschaft des in Fig. 3 dargestellten Diversity-Paares besteht darin, dass das Sendesignal eine gesamthaft konstante Hüllkurve (Enveloppe) aufweist, woraus eine optimale Senderendstufenausnützung resultiert.

Gemäss Fig. 3 wird bei den beiden ternären Signalen nur jedes zweite Zeichenintervall von einem Impuls belegt. Daher wird in den Zwischenpulsintervallen ausser allfällig anwesenden selektiven Störern, die sich im unmittelbaren Bereich der drei FSK-Frequenzen befinden, keine Energie detektiert. Dies kann zur subtraktiven Elimination der Störer herangezogen werden. Aus den Abweichungen des Frequenz/Zeitrasters von Fig. 2 lassen sich auch die Informationen für eine allfällige Zeichensynchronisationskorrektur ermitteln.

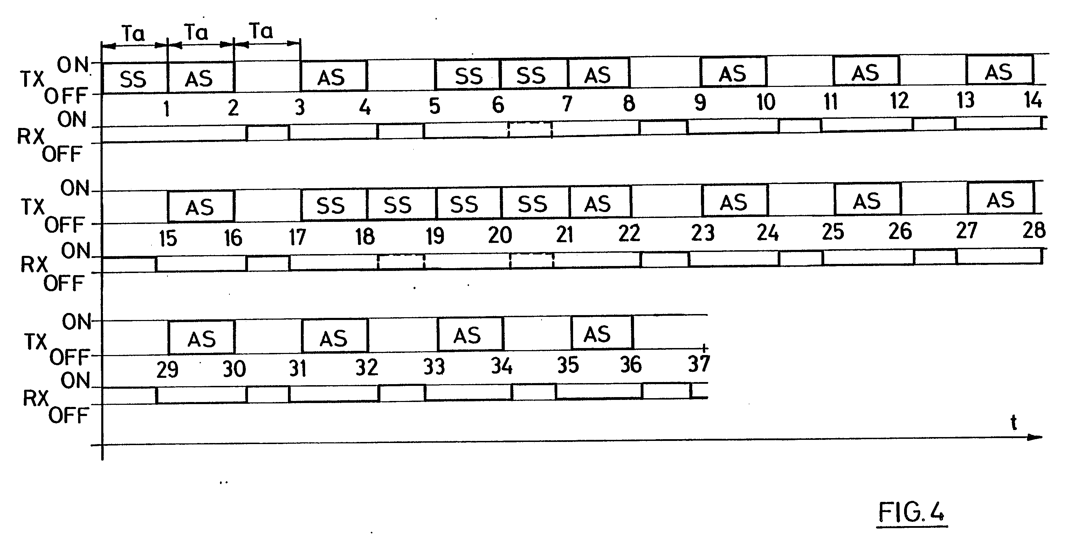

Bei dem in den Fig. 2 und 3 dargestellten Beispiel ist der Abstand zwischen den einzelnen FSK-Frequenzen mit 24 Hz gewählt. Somit beträgt die Bandbreite etwa 70 Hz und die Töne sind für die erforderliche Demodulationsprozedur gegen Uebersprechen genügend entkoppelt, so dass sie als einzelne orthogonale Signale betrachtet werden können. Die für eine Uebertragung benötigte Zeit soll sich nach der Kanalqualität richten. Dabei wird in der Praxis von einer Grundzeit von etwa 3 mal Ta ausgegangen, wobei Ta die Dauer des Adressensignals darstellt. Je nach dem Signal/Rauschverhältnis im betreffenden Kanal wird die jeweilige Grundzeit durch automatische Repetition nach einem Schema der in Fig. 4 dargestellten Art verlängert. Darstellungsgemäss wird zuerst ein normales Rufsignal der in Fig. 2 dargestellten Art mit einem Synchronisationssignal SS und einem Adressensignal AS ausgesandt (jeweils obere Zeile, Sender TX ON/OFF) und nach einer Zeitspanne von 2Ta sollte der angesprochene Empfänger aktiviert sein, und die Adresse bestätigen (jeweils untere Zeile, Empfänger RX ON/OFF). Nach einer Zeitspanne 3Ta erfolgt eine Repetition des Adressensignals AS; nach einer Zeitspanne 5Ta wird das gesamte Rufsignal repetiert, und zwar zuerst zweimal das Synchro nisationssignal SS und anschliessend fünfmal das Adressensignal AS, wobei die Adressensignale jeweils durch eine Einschaltphase der Länge Ta des Empfängers getrennt sind; anschliessend erfolgt eine zweite Repetition des gesamten Rufsignals mit viermaligem Synchronisations- und achtmaligem Adressensignal SS bzw. AS.

Das in Fig. 4 dargestellte repetitive Aussenden erhöht die Detektionswahrscheinlichkeit, indem im Empfänger eine zusätzliche Akkumulation durchgeführt wird. Dies bedingt einen in der Literatur als MARQ = Automatic Repeat Request with Memory bezeichneten Empfänger mit Gedächtnis, welcher zur Entscheidung über die zuletzt empfangenen Daten alle vorausgegangenen Werte als sogenannte Soft-Decision Werte heranzieht. Ein ähnliches Prinzip ist in dem Artikel "An efficient ARQ technique with Memory" von G. Benelli in Alta Frequenza No. 4, 1984, beschrieben.

Das in Fig. 4 dargestellte Rufprogramm kann auch bei der Uebertragung von Notmeldungen anstelle von Adressensignalen angewendet werden. Bei der Kombination von Adresse und Notmeldung wird die Notmeldung in gleicher Weise nach erfolgter Bestätigung der Adresse durch die Gegenstation angehängt und behandelt oder sie wird mit einem definierten Frequenzversatz zu den drei Adress-FSK-Frequenzen von den Adressen unterschieden. Die anfänglich empfangende Station kann nach erfolgter Detektion eine Quittung abgeben, die vorzugsweise in gleicher Art und Weise aufgebaut ist und somit der zuerst rufenden Station ebenfalls eine genaue Synchronisation ermöglicht. Dies ist im Hinblick darauf, dass bei Kurzwellenverbindungen an den beiden Standorten zumeist keine Gleichzeitigkeit vorhanden ist, ein Vorteil. Ausserdem kann die zuerst empfangende Station ebenfalls Adressensignale AS absetzen und dadurch beispielsweise im Sinn einer automatischen Messwerterfassung fernabgefragt werden.

Es sei hier auf einen wesentlichen Unterschied zwischen der Ermittlung von Selektivadresse und derjenigen eines Notrufs hingewiesen. Zur Ermittlung der Selektivadresse muss das empfangene Adressensignal AS mit der eigenen Adresse (und nur mit dieser) korreliert werden, zur Ermittlung von Notmeldungen hingegen mit allen möglichen Adressensignalen, da in diesem Fall alle Signale für den Empfänger wichtig sind.

In Fig. 5 ist das Ablaufdiagramm einer Verbindungsaufnahme dargestellt, bei welcher eine Station X eine Y ruft und die Station Y im schon erwähnten CHIBSCAN-Modus läuft. Die im Diagramm verwendeten Symbole sind in der Legende von Fig. 5 erläutert. Dabei bedeutet das in der Legende 1. Symbol von links, dass die in dem Kreis innerhalb des Symbols angegebene Station auf den Empfang des angegebenen Signals horcht. Steht im Kreis Y und beispielsweise AS, dann bedeutet das, dass die Station Y auf das Adressensignal AS horcht. Dabei gibt die Dimension a dieses Symbols den jeweiligen Subkanalbereich an und die Dimension b die Beobachtungsdauer. Die anderen drei angegebenen Symbole bedeuten das Aussenden des jeweiligen Signals (Synchronisationssignal SS, Adressensignal AS oder Identifikation ID) durch die im zugeordneten Kreis angegebene Station.

Auf der Abszisse von Fig. 5 ist die Frequenz f in Kilohertz aufgetragen und auf der Ordinate die Zeit t, wobei die Teilung der einzelnen fortlaufend numerierten Zeitpunkte der Dauer Ta eines Adressensignals AS (Fig. 4) entspricht. Am rechten Rand der Figur ist eine zur Ordinate parallele Gerade eingezeichnet, auf der verschiedene Zeitpunkte T0 bis T12 eingetragen sind. Oberhalb der Abszisse ist der Empfangskanal dargestellt.

Darstellungsgemäss ist der Empfangskanal, der sich im beschriebenen Ausführungsbeispiels über etwa 2 kHz erstreckt, in sechs Subkanäle SK oder drei Subkanal-Paare unterteilt, welche jeweils einen schraffiert markierten Ueberlappungsbereich aufweisen. Der Empfänger führt nun einen ständigen Suchlauf in diesen Subkanal-Paaren durch und stoppt diesen, sobald ein Synchronisationssignal SS detektiert worden ist.

Ab dem Zeitpunkt T0 befindet sich die Station Y auf Synchronisationssignalempfang im CHIBSCAN-Modus; die Länge eines Scan-Zyklus beträgt 3Ta. Zum Zeitpunkt T1 beginnt Station X mit dem Anruf und sendet ein Synchronisationssignal SS aus, und zwar in beiden Teilkanälen (Fig. 3). Zum Zeitpunkt T2 hat Station Y in den Subkanälen SK2 und SK5 synchronisiert und zum Zeitpunkt T3 beginnt Station X mit der Aussendung eines Adressensignals AS. Zum Zeitpunkt T4 geht Station X auf Empfang und horcht auf eine Bestätigung, die seitens Y durch Aussendung eines Synchronisationssignals zu erfolgen hat. Weil Station Y nicht reagiert hat, wiederholt Station X zum Zeitpunkt T5 das Adressensignal AS. Station Y hat die Adresse empfangen und sendet bei T6 ein Synchronisationssignal aus. Da Station X dieses nicht empfangen hat, wiederholt Station X bei T7 das Adressensignal. Bei T8 gibt Station Y wiederum Antwort. Station X empfängt diese und beginnt bei T9 mit der Aussendung der sogenannten Identifikation ID. Zum Zeitpunkt T10 sendet Station Y ihre Identifikation ID zur Wortsynchronisation bei Station X und schliesslich wiederholt Station X bei T11 und Station Y bei T12 jeweils die Aussendung ihrer Identifikation ID. Nun kann die eigentliche Nachrichtenübertragung beginnen. ·

Eine vorteilhafte Möglichkeit von CHIBSCAN besteht darin, dass der Sender vor einer Ausstrahlung innerhalb des Empfangskanals einen für ihn günstigen Subkanal SK auswählt. Bei einer weiteren Möglichkeit wechseln Sender und Empfänger nach erfolgter Synchronisation häufig den Kanal oder Subkanal, was in der Literatur mit Frequenzhüpfen bezeichnet ist. Wenn sich Sender und Empfänger dabei verlieren, dann fallen beide nach einer gewissen Zeit in den Synchronisationsmodus zurück. Daraus ist ersichtlich, dass eine einwandfreie Funktion eines derartigen Systems ein extrem störunabhängiges Arbeiten der Synchronisation voraussetzt. Eine andere Möglichkeit von CHIBSCAN stellt die Ueberlagerung von einigen Funkteilnetzen innerhalb eines Kanals ohne ungewollte gegenseitige Störung dar. Dabei verfügen jedoch Leitstationen über alle Subkanäle.

Voneinander unabhängige Benützer bekommen im allgemeinen verschiedene Frequenzen zugeteilt und arbeiten somit in verschiedenen Kanälen. Lässt es sich jedoch einmal nicht vermeiden, dass zwei Netze im selben Kanal arbeiten, so müssten entweder unterschiedliche Adressensignale verwendet werden, oder es wird, falls ersteres nicht möglich ist, folgendermassen verfahren:

Nach der Uebertragung des Adressensignals sind sowohl Stationen des einen als auch des anderen Netzes aktiviert. Der endgültige Zutritt wird nun dadurch erreicht, dass die gerade übertragene Adresse wiederholt oder eine zweite Adresse mit einem jeden Netz eigenen Frequenzversatz übertragen wird. Dies erfordert eine exakte Frequenzinformation und -verarbeitungsmöglichkeit, wie dies nur mittels digitaler Signalverarbeitung erreicht werden kann. Das eben beschriebene Problem lässt sich jedoch einfacher lösen, und zwar dadurch, dass ein möglichst grosser Adressensignalraum gesucht wird, von dem jedem Netz ein Subraum zur Verfügung steht.

Um eine eindeutige Erkennung bei stark gestörten Verhältnissen sicherzustellen, sollen sich die einzelnen Adressensignale möglichst stark unterscheiden. Denn da man bei der vorliegenden Anwendung auf der Empfängerseite nur den Bittakt kennt, können übliche Codes mit Fehlerkorrekturvermögen, die nur bei optimaler Wortsynchronisation wirksam sind, nicht verwendet werden. Diese üblichen Codes verwenden spezielle Präambeln, die dem Adressensignal vorgesetzt werden und zur Wortsynchronisation dienen. Diese Aufsplittung ist vor allem auf Burst-Kanälen schlecht, da die Gesamtdetektion auf zwei erfolgreiche Teildetektionen basiert.

Beim vorliegenden Verfahren werden statt dieser üblichen Codes mit Wortsynchronisation sogenannte selbstsynchronisierende Codes verwendet, bei denen die fehlende Wortsynchronisation durch Zufügen von zusätzlicher Redundanz bei gleichbleibendem Fehlerkorrekturvermögen realisiert wird. Die Qualität solcher Codes wird mittels der Autokorrelations- oder der Kreuzkorrelationsfunktion (AKF bzw. KKF) beschrieben und stellt ein Mass für die Aehnlichkeit eines Codes mit zeitlich verschobenen anderen Codes oder mit einem gleichen Code dar. Man spricht in der Literatur in diesem Zusammenhang oft von Pseudozufallssequenzen. Eine bekannte Gruppe dieser Pseudozufallssequenzen mit vielen Mitgliedern und besten Eigenschaften sind die sogenannten Gold-Codes, die beim vorliegenden Verfahren verwendet werden. Die verwendeten Adressensignale sind vorzugsweise ternäre Gold-Codes, von denen in der folgenden Tabelle 1 als Beispiel die 28 Mitglieder der Länge 26 aufgelistet sind.

EP 0 309 855 A2

```
 1:  0 0 1 1 0 1 0 2 1 2 2 2 1 0 0 2 2 0 2 0 1 2 1 1 1 2
 2:  0 0 2 1 1 0 1 0 0 2 0 0 2 0 0 1 2 2 0 2 0 0 1 0 0 1
 3:  0 1 1 2 2 2 1 1 1 0 0 0 1 0 2 2 1 1 1 2 2 2 0 0 0 2
 4:  1 0 2 0 1 2 2 2 2 0 0 2 1 2 0 1 0 2 1 1 1 1 0 0 1 2
 5:  0 1 0 2 1 0 0 0 2 0 2 2 0 0 2 0 1 2 0 0 0 1 0 1 1 0
 6:  1 2 2 2 2 1 1 0 2 2 2 1 1 2 1 1 1 1 2 2 0 1 1 1 2 2
 7:  2 1 2 0 0 2 1 0 1 2 1 2 0 1 2 1 0 0 1 2 0 2 1 2 1 0
 8:  1 1 0 1 1 2 1 2 1 1 2 1 2 2 2 0 2 2 1 2 1 2 2 1 2 1
 9:  1 2 1 2 1 2 0 2 0 2 1 0 0 2 1 2 1 2 1 0 1 0 1 2 0 0
10:  2 0 2 2 1 1 0 1 1 1 0 1 0 1 0 1 1 2 2 0 2 2 2 0 2 0
11:  0 1 2 2 0 1 2 2 0 0 1 1 2 0 2 1 1 0 2 1 1 0 0 2 2 1
12:  1 1 2 1 0 0 0 1 2 1 1 0 1 2 2 1 2 0 0 0 2 1 2 2 0 2
13:  1 1 1 1 2 1 2 0 0 1 0 2 0 2 2 2 2 1 2 1 0 0 2 0 1 0
14:  1 0 1 0 0 0 1 1 0 0 2 1 0 2 0 2 0 0 0 2 2 0 0 1 2 0
15:  0 0 0 1 2 2 2 1 2 2 1 1 0 0 0 0 2 1 1 1 2 1 1 2 2 0
16:  0 2 1 0 1 0 2 0 1 1 1 1 0 1 2 0 2 0 1 0 2 2 2 2 2 2
17:  2 0 0 2 2 0 1 2 0 1 1 2 1 1 0 0 1 1 0 2 1 0 2 2 1 2
18:  0 2 2 0 2 2 0 1 0 1 2 2 0 1 1 0 1 1 0 2 0 2 1 1 1
19:  2 1 0 0 1 1 2 1 0 2 2 0 1 1 2 0 0 2 2 1 2 0 1 1 0 2
20:  1 2 0 2 0 0 2 1 1 2 0 2 2 2 1 0 1 0 0 1 2 2 1 0 1 1
```

7

```
21:  2 2 2 1 2 0 2 2 1 0 2 0 0 1 1 1 2 1 0 1 1 2 0 1 0 0

22:  2 1 1 0 2 0 0 2 2 2 0 1 2 1 2 2 0 1 0 0 1 1 1 0 2 1

23:  1 0 0 0 2 1 0 0 1 0 1 0 2 2 0 0 0 1 2 0 0 2 0 2 0 1

24:  0 2 0 0 0 1 1 2 2 1 0 0 0 0 1 0 0 0 2 2 1 1 2 0 0 0

25:  2 2 0 1 0 2 0 0 0 0 0 1 1 1 1 0 2 0 1 0 0 0 0 0 2 2

26:  2 2 1 1 1 1 1 2 0 1 2 2 1 1 2 2 2 2 2 2 1 0 2 1 1

27:  2 0 1 2 0 2 2 0 2 1 2 0 2 1 0 2 1 0 1 1 0 1 2 1 0 1

28:  0 0 1 0 1 2 1 1 2 0 1 1 1 0 0 2 0 2 1 2 2 1 0 2 2 2
```

## Tabelle 1

Diese 28 Goldsequenzen der Länge 26 haben in allen Verschiebungen mindestens 46% unterschiedliche Zeichen. Für grössere Netze mit über 28 Teilnehmern lassen sich aus diesen Sequenzen Familien der Länge N ist gleich 3 hoch n minus 1 (n bezeichnet eine natürliche Zahl) als ternäre Signale erzeugen, oder es kann auf m-äre Signale zurückgegriffen werden.

Der Adressensignalempfänger führt ebenso wie der in der EP-A-0 243 885 beschriebene Synchronisationssignalempfänger zwei unabhängige Detektionen und Auswertungen der beiden Teilsignale des Diversity-Paares durch und vergleicht nachträglich die Resultate. Es erfolgt eine aktive Frequenz- und Bitsynchronisation mit Hilfe digitaler Signalverarbeitung, insbesondere der schnellen Fouriertransformation (FFT), innerhalb eines Frequenzabschnitts von 500 Hz in einem Funkkanal. Die beiden additiv gestörten Empfangssignale werden während jeder Beobachtungsdauer T von einem A/D-Wandler nach vorgängiger Analogverarbeitung (Filtern und Mischen) in eine Sequenz von numerischen Werten umgewandelt.

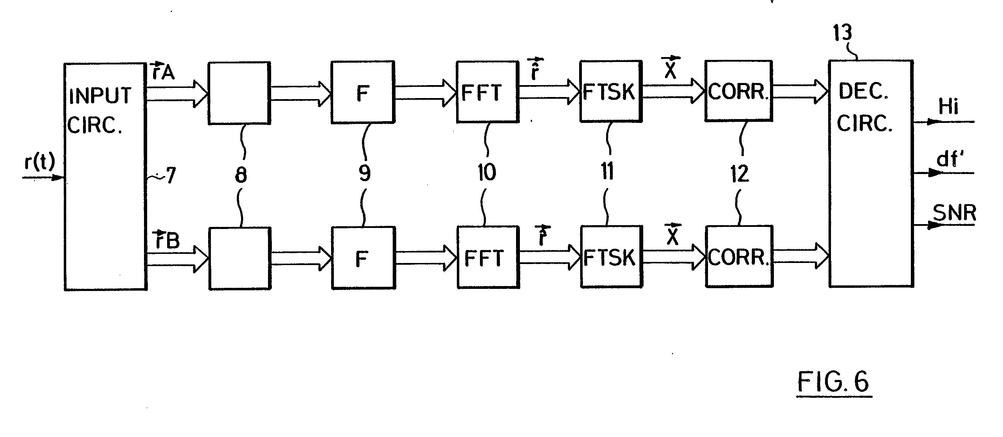

Fig. 6 zeigt ein Blockschaltbild eines erfindungsgemässen Adressensignalempfängers. Dieser enthält darstellungsgemäss einen Eingangsteil 7 (Input Circuit) für das Adressensignal r(t), welcher zwei Ausgänge aufweist, an denen je ein Signalvektor rA bzw. rB liegt. Die Signalvektoren gelangen anschliessend in eine Frequenzanpassungsstufe 8 und werden dann in einer Stufe 9 mit einer Fensterfunktion F gewichtet, auf welche in einer Stufe 10 die schnelle Fouriertransformation FFT folgt. Das Ausgangssignal der Stufe 10 ist mit Vektor $\hat{r}$ bezeichnet.

Anschliessend erfolgt in einer Stufe 11 eine FTSK-Dmodulation (FTSK = Frequency-Time-Shift-Keying). Das mit Vektor X bezeichnete Ausgangssignal der Stufe 11 gelangt in einen Adressensignalkorrelator 12. Die Ausgänge der beiden Adressensignalkorrelatoren 12 für die beiden Hälften des Diversity- Paares Signalvektor rA und Signalvektor rB sind zu einer Entscheidungsstufe 13 (Decision Circuit) geführt, welche drei Ausgänge aufweist, und zwar einen Ausgang Hi (Adressensignal vorhanden oder nicht vorhanden), einen Ausgang df' (Abschätzung des Frequenz-Offsets, siehe Fig. 14) und einen Ausgang SNR (Signal/Rauschen).

Das Blockdiagramm von Fig. 6 zeigt die einzelnen Funktionsstufen der Signalverarbeitung, wie sie von dem durch einen Signalprozessor gebildeten entsprechenden Teil des Adressensignalempfängers durchgeführt wird. Im Zusammenhang mit den folgenden Figuren wird nur noch eine Hälfte des Diversity-Empfängers betrachtet (Signalvektor rA), da diese völlig symmetrisch aufgebaut ist. Mit dem zweiten Signalvektor rB erfolgt im Prozessor dieselbe Signalverarbeitung, nur mit anderen Zahlenwerten.

Der Eingangsteil 7 entspricht dem in Fig. 5 der EP-A-0 243 885 dargestellten Empfangsteil E. Das analoge Adressensignal r(t) durchläuft diesen in gleicher Weise wie das Synchronisationssignal und wird nun pulsweise demoduliert. Das Empfangsband von 250 Hz - 750 Hz wird um den in der Synchronisation gewonnen Offset in der Frequenzanpassungsstufe 8 auf das nächste Frequenzraster, welches ein Vielfaches von 8 Hz darstellt, gemischt. Zudem wird die aus der Zeitsynchronisation erhaltene Ablage so korrigiert, dass die Pulse exakt in den zu bearbeitenden Zeitausschnitt zentriert werden. Die Pulse werden dann mittels einer 256-Punkte FFT und einer Beobachtungsdauer T von 2mal Tp = 125 ms (Tp siehe Fig. 3) in den Frequenzraum transformiert. Es wird ein 4 Term Harris Fenster der Dauer 2mal Tp als Vorfilter verwendet, um sinusförmige Störer in ihrem Uebersprechverhalten zu begrenzen. Eine derartige FFT wird alle Tp = 62,5 ms durchgeführt.

Es resultiert eine Auflösung des Spektrums von 8 Hz, wobei dank der Synchronisation die Spektrallinien des ternären (allgemein: m-ären) Adressensignals jeweils auf dem Frequenzraster liegen. Dies begründet auch die sinnvolle Wahl von 24 Hz Frequenzablage der Töne des m-ären Signals.

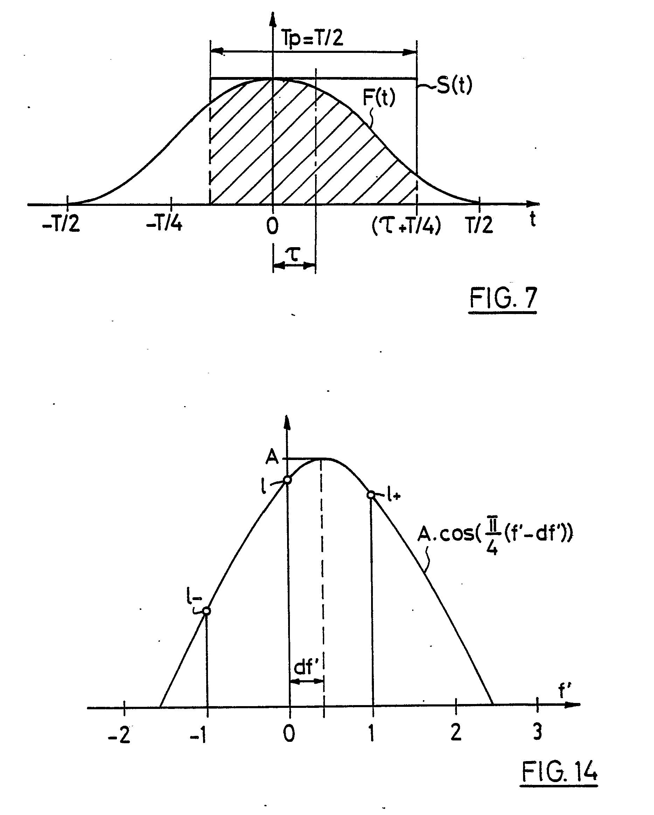

In Fig. 7 ist das Zeitdiagramm eines Pulses S(t) bezüglich des FFT-Fensters dargestellt. Der Puls S(t) hat eine Länge Tp = T/2 = 62,5 ms, das Fenster F(t) eine solche von T und die Fehlsynchronisation ist gleich Tau.

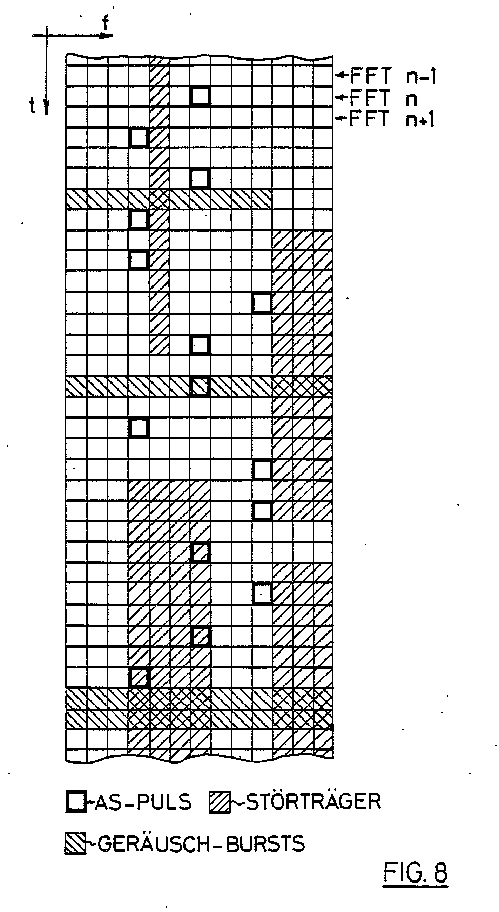

In Fig. 8 sind die FFT-Ausgangswerte in der diskreten Zeit-Frequenz-Ebene dargestellt (siehe dazu auch Fig. 3). Man erhält dieses Adressensignal, das nach mehreren FFT's zusammen mit Störträgern und Geräuschbursts ein Bild der dargestellten Art ergibt, durch Betragbildung (Enveloppendetektion) der diskreten komplexen Frequenstützwerte an den Stellen, wo Pulsspektren erwartet werden. Es wird in jedem zweiten Intervall ein Puls detektiert, während in den Zwischenintervallen die Geräusch- und Störträger alleine verbleiben.

Diese bekannte Eigenschaften des Adressensignals nutzt der Empfänger aus, um die Störträger im FTSK-Demodulator 11 möglichst zu eliminieren. Bezüglich derartiger FTSK-Systeme wird auf den Artikel "Combined Frequency and Time-Shift-Keyed Transsmission Systems" von Frank G. Splitt in IEEE Transaction on Communication Systems, December 1963, Seiten 414-421, verwiesen.

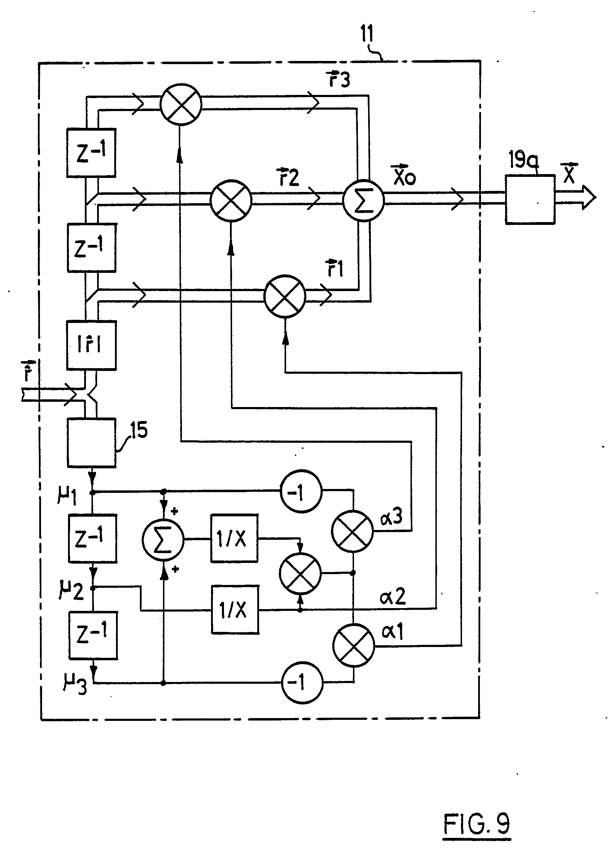

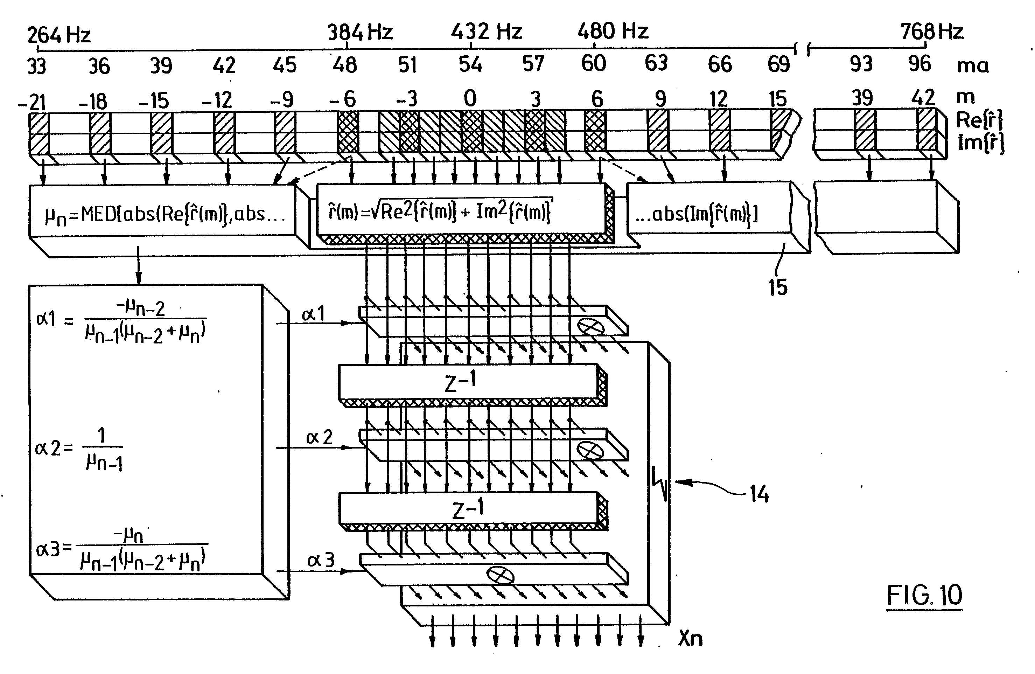

Der FTSK-Demodulator 11 ist in den Fig. 9 und 10 in zwei verschiedenen Darstellungen gezeigt: Die Ausgangswerte der (n-1)-ten und der (n+1)-ten FFT- Intervalle werden im Normalfall je mit halbem Gewicht von denjenigen der n-ten Intervalle subtrahiert. Dies erfolgt mit dem in Fig. 9 dargestellten adaptiven Transversalfilter 14 mit 3 Anzapfungen. Die so bei jeder der drei möglichen Frequenzen gewonnenen Signale werden abgespeichert. Zur Ausschaltung der Burst-Störungen, die gemäss Fig. 8 alle drei Frequenzen meist kurzzeitig gleich stark belasten, werden die Koeffizienten des Transversalfilters 14 nicht konstant gehalten, sondern mit dem in unmittelbarer Umgebung mit einem Geräuschestimator 15 ermittelten Geräusch gewichtet, wobei sich die in den Fig. 9 und 10 eingetragenen Gewichte Alpha 1, Alpha 2 und Alpha 3 ergeben. Für diese Gewichte soll gelten:

-(Alpha 1 + Alpha 3) = Alpha 2

Als Geräusch dient wegen der zu erwartenden diskreten Störer nicht ein Mittelwert, sondern der Medianwert der benachbarten Betragsspektren. Zudem wird das Adressensignal auf den momentanen Geräuschwert bezogen, um später eine vom Signal/Geräuschverhältnis und nicht etwa von der absoluten Signalenergie abhängige Entscheidung vornehmen zu können. Das Mass der Unterdrückung des so erhaltenen Transversalfilters richtet sich nach dem Verhältnis der Energie des Störträgers zu derjenigen des Grundrauschens und praktisch nicht nach der Burstenergie.

Mit der FFT-Operation, deren Auflösung 8 Hz beträgt, und mit der nachfolgenden Betragsbildung der komplexen spektralen Stützwerte wird eine Bank von nichtkohärenten Detektoren realisiert. In Fig. 10 sind in der obersten Zeile die Frequenzwerte des ternären FSK-Signals in Hertz aufgetragen und darunter die entsprechenden aus der FFT-Operation mit der genannten Auflösung von 8 Hz resultierenden Absolutwerte ma, denen in der folgenden Zeile Relativwerte m zugeordnet sind. Die letzteren sind dadurch gebildet, dass die Mittenfrequenz des ternären FSK mit m = 0 bezeichnet ist, die benachbarten Werte mit m = 3 und m = -3, die anschliessenden Werte mit m = 6 und m = -6, und so weiter.

Die Werte bei m = -6, m = -3, m = 0, m = 3 und m = 6 dienen für die Adressenkorrelation, wobei die inneren Werte m = -3, m = 0 und m = 3 die eigentliche Information tragen. Die Werte m = -6 und m = 6 können für eine Erweiterung des Adressenbereichs durch drei aus fünf Frequenzen für die Uebertragung des ternären Signals gewählt oder zur Uebertragung zusätzlicher Informationen verwendet werden.

Zur Ueberwachung des Frequenzoffsets werden die Werte bei m = -4, m = -2, m = 1, m = 1, m = 2, m = 4 in gleicher Weise wie die oben erwähnten verarbeitet. Somit durchlaufen also insgesamt 11 Spektralwerte das adaptive Transversalfilter 14 zur Unterdrückung von Störträgern. Die Koeffizienten des Filters bestimmen sich aus den Medianwerten von drei aufeinanderfolgenden Zeitintervallen. Die Medianwerte werden aus den übrigen im Durchlassband liegenden unkorrelierten Spektralwerten ermittelt, was beim dargestellten Ausführungsbeispiel 19 Komponenten ergibt, da als Folge des gewählten Fensters nur jeder dritte Wert unkorreliert ist.

Der FTSK-Demodulator 11, realisiert in digitaler Signalverarbeitung, entspricht den Darstellungen der Figuren 9 und 10, wobei der X-Vektor in Fig. 9 elf Komponenten aufweist (Vektorkomponenten Xn in Fig. 10). Die Berechnung der Gewichte Alpha und der mit dem Bezugszeichen My bezeichneten Medianwerte ist aus Fig. 10 ersichtlich. In Fig. 9 bezeichnet der bei My und bei Alpha jeweils angegebene Index die Filterstufe; in Fig. 10 bezeichnen in den Formeln für Alpha die Indices n-2, n-1, n die zeitliche Abfolge von aufeinanderfolgenden FFT-Intervallen.

Den in der zweitobersten Zeile von Fig. 10 eingetragenen Relativwerten m der Frequenzwerte des ternären FSK-Signals entsprechen Werte Re und Im für alle $\hat{r}$, wobei Re und Im den Realteil beziehungsweise den Imaginärteil des Signalspektrums bezeichnet. Aus den Werten Re und Im werden nach den angegebenen Formeln die Werte $\hat{r}$(m) sowie die Medianwerte My berechnet und aus den Medianwerten die Gewichte Alpha. Mit $\hat{r}$(m) und Alpha werden die Vektorkomponenten Xn ermittelt.

Die Sequenz der Ausgangsvektoren Xn des Transversalfilters 14 bildet ein aus diskreten, "analogen" Werten bestehendes Muster gemäss Fig. 8. Der Adressensignalkorrelator 11 führt nun eine in der Literatur als Pattern Recognition bezeichnete Mustererkennung durch, bei welcher ein ideales Muster mit dem empfangenen verglichen wird. Der Hypothesenentscheid über das Vorhandensein eines richtigen Adressensignals erfolgt aufgrund des Korrelatorausgangswertes, der mit einem Schwellenwert verglichen wird.

Tief im Rauschen verborgene Muster können durch repetitives Aussenden und synchrone Akkumulation in einem Digitalfilter erkennbar gemacht werden. Dazu dient ein am Eingang des Adressensignalkorrelators 11 angeordnetes Digitalfilter 16 erster Ordnung, durch welches eine Akkumulation der anhand von Fig. 7a der EP-A-0 243 885 beschriebenen Art erfolgt.

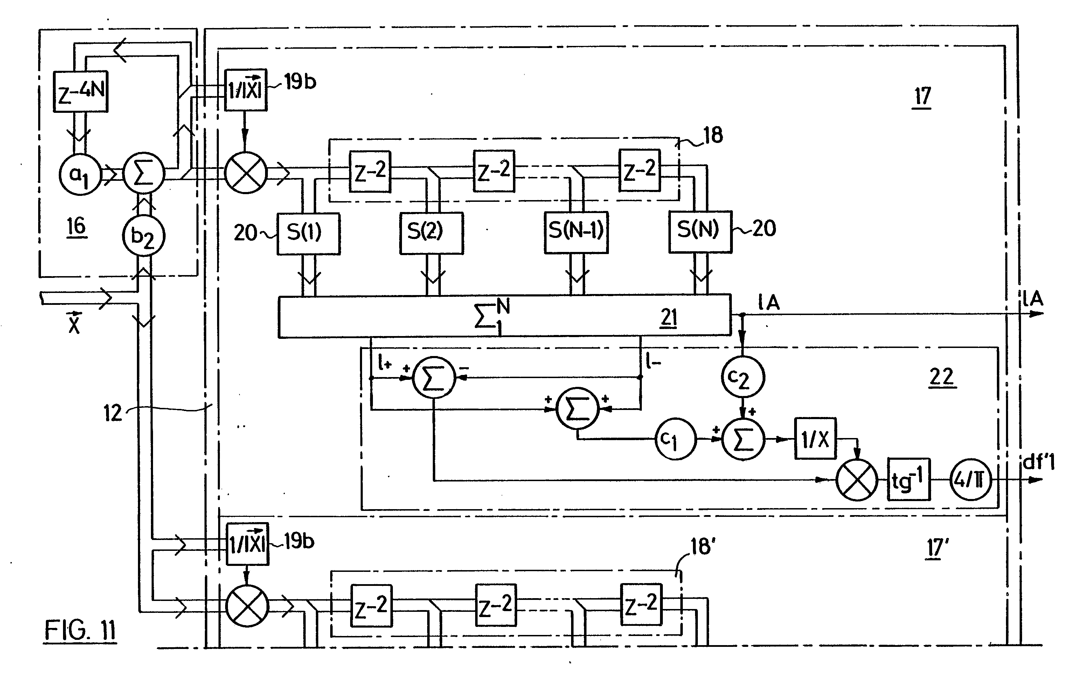

Gemäss Fig. 11 enthält der Adressensignalkorrelator 11 zwei Korrelatoren 17 und 17', die beispielsweise je ein Vektorschieberegister 18, 18' der Länge 2.(N-1) aufweisen, wobei N die Länge der ternären Sequenz bezeichnet, deren Zeichen ja nur in jedem zweiten Vektor auftreten. Das Adressenmuster gemäss Fig. 8 durchläuft nun schrittweise pro FFT die Korrelatoren 17 und 17', und der Adressensignalkorrelator 11 zeigt im Koinzidenzfall einen erhöhten Wert an.

Ein Problem bilden dabei die aufgrund von Fading, Empfänger-AGC (AGC = Automatic Gain Control) und Signal zu Rauschen-Quotientenbildung auftretenden Verzerrungen, welche den einen oder den anderen der die beiden Korrelatoren 17, 17' durchlaufenden Vektoren X betreffen. Dieses Problem wird entsprechend einer Limiterfunktion durch eine Normierung der Vektoren X auf den Betrag 1 gelöst. Die Grösse für den Hypothesentest 1 bestimmt sich nun als Skalarprodukt der Vektoren R und S:

1 = Vektor R mal Vektor S

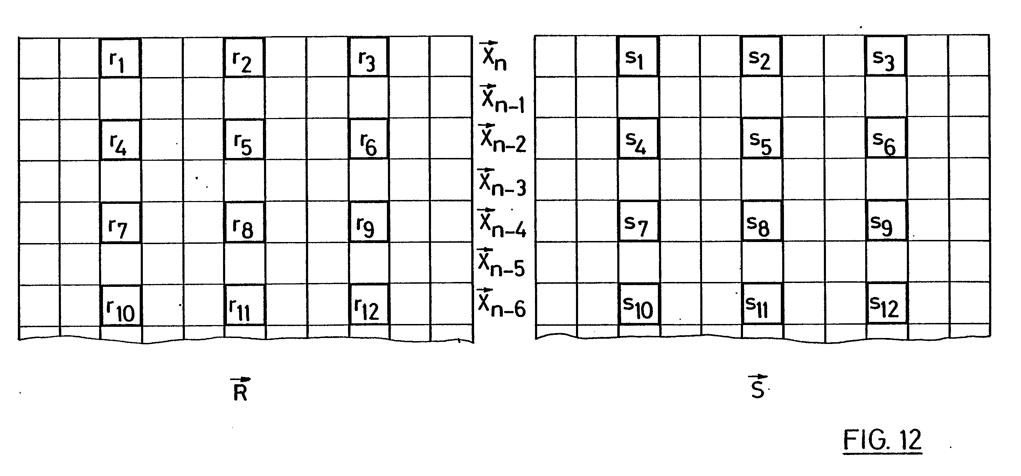

Hier bezeichnet der Vektor R die normierte Empfangsadresse und der Vektor S die ideale Musteradresse. Die Normierung der Empfangsadresse erfolgt erstens in einer zwischen FTSK-Demodulator 10 und Adressensignalkorrelator 11 angeordneten Skalierstufe 19a (Fig. 9) und zweitens in einer Normierstufe 19b (Fig. 11), welche den Betrag von Vektor X auf 1 festlegt. Die Zuordnung der Komponenten der beiden Vektoren R und S ist aus Fig. 12 ersichtlich.

Der nun auf Geräusch und Summenenergie normierte Signalvektor X wird nach jeder Vektorschieberegisterstufe mit der Verzögerung 2Tp auf N(N=Länge des Adressensignals) Decoderelemente 20 geführt. Diese enthalten elf entsprechend der Musteradresse für "0", "1" oder "2" verdrahtete Eingänge, von denen die mittleren neun zur Adressenerkennung und Frequenzoffset-Kontrolle verwendet werden. Die beiden äusseren Eingänge sind als Ausbaureserve bestimmt.

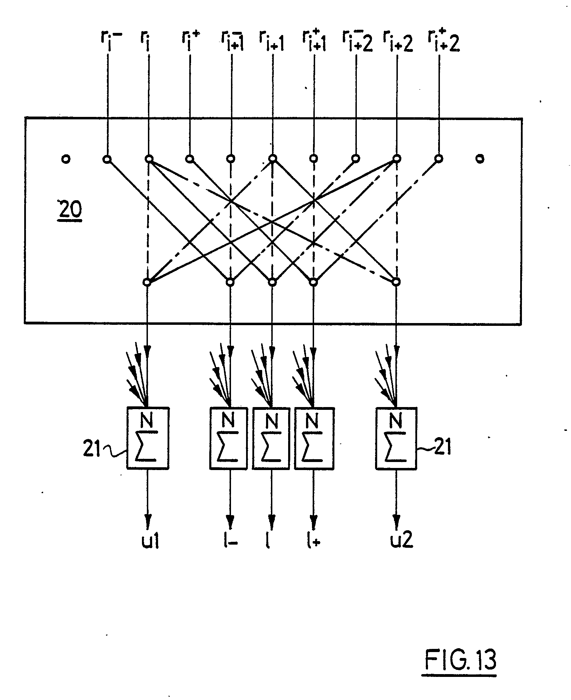

In Fig. 13 ist ein derartiges Korrelator-Decoderelememt 20 mit Summierung dargestellt. Mit ri und so weiter sind die neun Zuleitungen zu den Eingängen des Decoderelements 20 bezeichnet, welches fünf zu entsprechenden Summiergliedern 21 geführte Ausgänge aufweist. Die Eingänge und die Ausgänge des Decoderelements 20 sind auf die dargestellten Weise miteinander verbunden, wobei eine voll ausgezogene Verbindung das ternäre Quellensymbol "0", eine gestrichelte Verbindung das Symbol "1" und eine strichpunktierte Linie das Symbol "2" repräsentiert.

Die fünf Ausgänge der Summierglieder 21 sind mit u1, 1-, 1, 2+ und u2 bezeichnet. Der Ausgang 1 als Summe der entsprechenden Beiträge aller Decoderelemente 20 ist die eigentliche Detektionsvariable, über die das Auftreten des gesuchten Adressensignals entschieden wird. Die Entscheidung anhand der Summe anstatt jedes Einzelzeichens ist in jedem Fall robuster und ist der aus der Literatur bekannten "Soft-Decision" verwandt. Die Ausgänge 1+ und 1- dienen zur Frequenzoffsetbestimmung (Fig. 14). Die Ausgänge u1 und u2 stellen das Skalarprodukt des Vektors R (skalierte Empfangsadresse) mit den beiden zur ternären Vergleichssequenz komplementären Sequenzen dar und können als Kontrolle in der Art einer Fehlergrösse benützt werden.

Im Fall eines Notmeldemodems sind selbstverständlich alle Decoderelemente programmierbar, so dass eine Korrelation mit allen möglichen Meldungen durchführbar ist. Dies ist dank der Realisierung in DSP-Technologie (DSP = Digital Signalverarbeitung) möglich, da das Empfangssignal exakt gespeichert und die rechnerische Korrelation in kürzester Zeit vollzogen werden kann.

Gemäss Fig. 11 enthält jeder Korrelator 17, 17' einen Frequenzoffset-Estimator 22, welchem die Ausgänge 1+ und 1- des Summierglieds 21 zugeführt sind. Die Abschätzung des Trägerfrequenzoffsets (Mittenfrequenz der ternären FSK) ermöglicht einen Nachabgleich des Empfängers nach erfolgter Detektion des Adressensignals, falls dieses während des Empfangs weggedriftet ist. Dadurch ist für die nachfolgenden Signale oder Daten wieder ein optimaler Betrieb garantiert.

Wie in Fig. 14 dargestellt, werden im Frequenzoffset-Estimator 22 die aus der Summierung 21 (Fig. 11) gewonnenen drei Werte 1 +, 1- und 1 im Spektrum im ungestörten Fall als Punkte einer Cosinuskurve betrachtet. Die Auflösung dieser drei Werte auf der Cosinuskurve führt zur Beziehung:

$df' = (4/pi) . arctg ((1 + - 1-)/(1 + + 1-)$

Infolge der statistischen Abhängigkeit unmittelbar benachbarter Spektralstützwerte bei Verwendung eines 4 Term Harris-Fensters in der Stufe 9 (Fig. 6) vor der FFT und des im allgemeinen mit Geräusch behafteten Empfangsadressenvektors R kann eine bessere Schätzung ermittelt werden, indem der Term (1 + + 1-) im Nenner der Formel für $df'$ durch folgenden Ausdruck ersetzt wird:

$9.1-5,36.(1- + 1+)$

Die Ausgangssignale der beiden Korrelatoren 17 und 17' des Adressensignalkorrelatorts 11, das sind für den Signalvektor rA die Detektionsvariablen 1A und 1'A und die Werte df'1 und df'2 zur Frequenzoffset-Bestimmung, gelangen nun in die Entscheidungsstufe 13 (Fig. 6). Gleiches geschieht mit entsprechenden Werten für den Signalvektor rB. In der Entscheidungsstufe 13 erfolgt die Entscheidung Adressensignal vorhanden oder nicht, die Abschätzung der Frequenzabweichung und die Bestimmung des Signal zu Geräusch-Verhältnisses.

Für die Frequenzabweichung Delta f gilt dann:

Delta f = 8 Hz . df'

Die so gewonnenen Frequenzabweichung Delta f kann zu gegebener Zeit in der Frequenzanpassungsstufe 8 (Fig. 6) kompensiert werden.

Die im beschriebenen System eingestellten Betriebsdaten sind für eine Detektionswahrscheinlichkeit Pd = 0,5 derart, dass mit durchschnittlich nur einem Fehlalarm pro Monat Betriebszeit des Adressensignalempfängers gerechnet werden muss. Die Detektionsempfindlichkeit liegt somit bei einem Signal/ Rauschverhältnis von -17 dB (2 kHz Bandbreite) und wird durch den Einsatz des Digitalfilters 16 (Fig. 11) zur Akkumulation schwacher Signale bei zehnfacher Repetition auf etwa -27 dB erhöht. Die Diversity-Möglichkeit der beiden Kanäle bringt weitere 3 dB Gewinn, der aber im Fall von Störungen durch selektive Signale noch wesentlich grösser ist.

Die Vorteile der Realisierung des Adressensignalempfängers mittels Echtzeit-Digital-Signalverarbeitung liegen hauptsächlich in der absoluten Alterungsfreiheit, der eindeutigen Reproduzierbarkeit und der hohen Flexibilität. Zusätzlich resultieren optimale Betriebsdaten, wie extrem hohe Resistenz gegen selektive Störer dank hochauflösender FFT und robuste komplexe Adressensignale mit optimaler Korrelation dank Soft-Decision. Diese optimalen Betriebsdaten, die mit analogen Mitteln nicht erreicht werden können, ermöglichen einen Einsatz bei neuen Anwendungen, bei denen extreme Meldübertragungssicherheit oder Selektivruffähigkeit gefordert sind. Beispiele für derartige Anwendungen liegen im ECCM-Bereich (ECCM = Electronic counter counter measurement) mit aktiver Störung oder in Notübertragungsnetzen mit lebenswichtigen Aufgaben.

Im Hinblick auf eine Erweiterung des Systems zur Uebertragung von beliebigen Daten unter erschwerten Bedingungen wird mit Hilfe des beschriebenen Verfahrens folgendes erreicht:

- Frequenz-, Bit- und Wortsynchronisation sind optimal hergestellt und nachführbar.
- Bei allzu schlechten Kanalverhältnissen, die keinen vernünftigen Verkehr erlauben, können sich die Stationen dank Selektivrufeinrichtung und Notmeldevorrat automatisch auf geeignete Massnahmen, wie beispielsweise Frequenzwechsel, Datenrate und dergleichen, absprechen. Diese Möglichkeit, einen sogenannten Aufrufkanal unter allen denkbaren Umständen benützen zu können, ist auch für die Synchronisation von Netzen mit Frequenzhüpfverfahren sehr gut geeignet.

. Da das beschriebene System nur den NF-Kanal ausnützt, lässt es sich mit praktisch allen bestehenden Funkanlagen betreiben. Darüber hinaus besteht auch bei älteren Ausrüstungen die Möglichkeit einer Betriebsadaption, dies erfordert allerdings das Ablesen einer Meldungsanzeige sowie gewisse manuelle Massnahmen. Neuere Geräte können über ihre Steuerschnittstelle automatisch mit dem hier beschriebenen Gerät kommunizieren und einen adaptiven Funkverkehr ermöglichen.

## Ansprüche

1. Verfahren zur Uebertragung von Selektivadressen und/oder Notmeldungen in Kurzwellenfunknetzen mit mehreren einen Sender und/oder einen Empfänger aufweisenden Stationen, mittels eines von einem Sender ausgesandten und aus einem Synchronisations- und aus einem Adressensignal bestehenden

EP 0 309 855 A2

Rufsignals, dadurch gekennzeichnet, dass als Adressensignal (AS) ein FSK-Signal verwendet wird, welches durch Aufteilung in zwei identische m-äre FSK-Signale ein Diversity-Paar bildet, und dass als Betriebsart ein Channel in Band Scanning verwendet wird.

2. Verfahren nach Anspruch 1, dadurch gekennzeichnet, dass das das Adressensignal (AS) bildende FSK-Signal in zwei ternäre FSK-Signale aufgeteilt wird.

3. Verfahren nach Anspruch 2, dadurch gekennzeichnet, dass die Zeichenrate auf 16 Bd und damit die Länge (Tp) eines Pulses eines Diversity-Paares auf 62,5 ms festgelegt wird.

4. Verfahren nach Anspruch 2 oder 3, dadurch gekennzeichnet, dass für jedes Diversity-Teilsignal nur jedes zweite Zeichenintervall von einem Puls belegt wird, so dass in den Zwischenpulsintervallen keine Sendeenergie vorhanden ist, dass in den Zwischenpulsintervallen detektierte und von allfällig anwesenden Störern herrührende Energie zur subtraktiven Elimination derselben verwendet wird, und dass die Gesamtsignalumhüllende konstant ist.

5. Verfahren nach Anspruch 2, dadurch gekennzeichnet, dass das Adressensignal (AS) repetitiv ausgesendet und die Sendezeit entsprechend dem Signal/Rausch-Verhältnis adaptiv verlängert wird, und dass im Empfänger alle vorausgegangenen demodulierten Werte als sogenannte Soft-Decision- Werte zur Entscheidung über die zuletzt empfangenen Daten beigezogen werden.

6. Verfahren nach Anspruch 5, dadurch gekennzeichnet, dass der Uebertragungskanal in zwei Hälften (A, B) für die beiden Signale des Diversity- Paares und jede Hälfte in m Subkanalpaare (SK1 - SK3 bzw. SK4 - SK6) aufgeteilt wird, und dass der Empfänger in den Subkanalpaaren einen ständigen Suchlauf durchführt.

7. Verfahren nach Anspruch 6, dadurch gekennzeichnet, dass der Sender vorgängig zu einer Ausstrahlung einen für ihn günstigen Subkanal (SK1 - SK6) innerhalb des Uebertragungskanals auswählt.

8. Verfahren nach Anspruch 6, dadurch gekennzeichnet, dass bei Betrieb von zwei Funknetzen im selben Kanal unterschiedliche Adressensignale (AS) für die beiden Netze verwendet werden.

9. Verfahren nach Anspruch 6, dadurch gekennzeichnet, dass für die Adressensignale (AS) sogenannte selbstsynchronisierende Codes, vorzugsweise Gold-Codes verwendet werden.

10. Vorrichtung zur Durchführung des Verfahrens nach Anspruch 1, mit einem Adressensignalempfänger, dadurch gekennzeichnet, dass der Adressensignalempfänger einen analogen Eingangsteil (7) und einen Signalprozessor zur numerischen Signalverarbeitung aufweist, durch welchen Signalprozessor mittels einer schnellen Fouriertransformation (FFT) eine Transformation der Pulse in den Frequenzraum erfolgt.

11. Vorrichtung nach Anspruch 10, dadurch gekennzeichnet, dass der Signalprozessor eine vor der Stufe (10) für die schnelle Fouriertransformation (FFS) angeordnete Stufe (9) zur Gewichtung der Signalvektoren (Vektor rA, Vektor rB) darstellenden Ausgangssignale des Eingangsteils (7) mit einer Fensterfunktion (F) aufweist.

12. Vorrichtung nach Anspruch 11, dadurch gekennzeichnet, dass der Ausgang der Stufe (10) für die schnelle Fouriertransformation (FFT) an eine Demodulatorstufee (11) geführt ist, in welcher eine sogenannte FTSK-Demodulation erfolgt.

13. Vorrichtung nach Anspruch 12, dadurch gekennzeichnet, dass die Demodulatorsstufe (11) ein Transversalfilter (14) mit mehreren Anzapfungen sowie einen Geräuschestimator (15) zur Berechnung von Werten (Alpha 1 - Alpha 3) für die Gewichtung der Filterkoeffizienten aufweist.

14. Vorrichtung nach Anspruch 13, dadurch gekennzeichnet, dass die Ausgangssignale (Vektor X) der Demodulatorstufe (11) an einen Adressensignalkorrelator (12) und dessen Ausgangssignale (I, df´) an eine Entscheidungsstufe (13) geführt sind.15. Vorrichtung nach Anspruch 14, gekennzeichnet durch ein zwischen Demodulatorstufe (11) an einem Adressensignalkorrelator (12) und dessen Ausgangssignale (I, df´) an eine Entscheidungsstufe (13) geführt sind.

15. Vorrichtung nach Anspruch 14, gekennzeichnet durch ein zwischen Demodulatorstufe (11) und Adressensignalkorrelator (12) eingeordnetes digitales Filter erster Ordnung (16).

16. Vorrichtung nach Anspruch 15, dadurch gekennzeichnet, dass der Adressensignalkorrelator (12) zwei Korrelatoren (17, 17´) mit vorzugsweise je einem Vektorschieberegister (18, 18´) aufweist, so dass die direkten und die gefilterten Signalwerte (Vektor X) einzeln korreliert werden können.

17. Vorrichtung nach Anspruch 16, dadurch gekennzeichnet, dass die Länge der Vektorschieberegister (18, 18´) 2.(N-1) beträgt, wobei N die Länge der m-ären Empfangssequenz bezeichnet.

18. Vorrichtung nach Anspruch 17, gekennzeichnet durch den Stufen der Vektorschieberegister (18, 18´) zugeordnete Decoderelemente (20), auf welche der Signalvektor (Vektor X) geführt ist.

19. Vorrichtung nach Anspruch 18, dadurch gekennzeichnet, dass jedes Decoderelement (20) mindestens neun Eingänge (ri) zur Adressenerkennung und Frequenzoffset-Kontrolle aufweist, welche entsprechend der jeweiligen Musteradresse verdrahtet sind.

12

20. Vorrichtung nach Anspruch 19, dadurch gekennzeichnet, dass die Ausgänge jedes Decoderelements (20) zu Summiergliedern (21) geführt sind, und dass eines der Ausgangssignale der Summierglieder, und zwar dasjenige (1), welches die Summe der entsprechenden Beiträge aller Decoderelemente repräsentiert, die Detektionsvariable für die Entscheidung über das Auftreten des gesuchten Adressensignals (AS) bildet.

21. Vorrichtung nach Anspruch 20, dadurch gekennzeichnet, dass jeder Korrelator (17, 17') einen Frequenzoffset-Estimator (22) zur Abschätzung des Trägerfrequenzoffsets enthält, dessen Ausgangssignal (df') ebenfalls an die Entscheidungsstufe (13) geführt ist.

13

FIG.1

FIG.2

FIG. 3

FIG.4

EP 0 309 855 A2

FIG. 5

FIG. 6

EP 0 309 855 A2

FIG. 7

FIG. 14

FIG. 8

FIG. 9

FIG.10

$\mu_n = MED[abs(Re\{\hat{r}(m)\}, abs...$

$\hat{r}(m) = \sqrt{Re^2\{\hat{r}(m)\} + Im^2\{\hat{r}(m)\}}$

$...abs(Im\{\hat{r}(m)\}]$

$\alpha1 = \dfrac{-\mu_{n-2}}{\mu_{n-1}(\mu_{n-2} + \mu_n)}$

$\alpha2 = \dfrac{1}{\mu_{n-1}}$

$\alpha3 = \dfrac{-\mu_n}{\mu_{n-1}(\mu_{n-2} + \mu_n)}$

EP 0 309 855 A2

FIG. 11

FIG. 12

FIG.13